(19) **Europäisches Patentamt / European Patent Office / Office européen des brevets**

(11) **EP 4 628 377 A1**

(12) **EUROPEAN PATENT APPLICATION**
published in accordance with Art. 153(4) EPC

(43) Date of publication:
08.10.2025 Bulletin 2025/41

(21) Application number: 23896146.0

(22) Date of filing: 25.08.2023

(51) International Patent Classification (IPC):
*B60W 20/15* (2016.01)

(52) Cooperative Patent Classification (CPC):
B60K 6/24; B60W 20/10; B60W 20/15; Y02T 10/62

(86) International application number:
PCT/CN2023/115069

(87) International publication number:
WO 2024/113987 (06.06.2024 Gazette 2024/23)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.11.2022 CN 202211504126

(71) Applicant: BYD Company Limited
Shenzhen, Guangdong 518118 (CN)

(72) Inventors:
• SHI, Mingjie
Shenzhen, Guangdong 518118 (CN)
• JIANG, Wei
Shenzhen, Guangdong 518118 (CN)
• LU, Guoxiang
Shenzhen, Guangdong 518118 (CN)

(74) Representative: Mathys & Squire
The Shard
32 London Bridge Street
London SE1 9SG (GB)

(54) **HYBRID VEHICLE, ENGINE STARTING CONTROL METHOD THEREOF, MEDIUM, AND CONTROLLER**

(57) A hybrid vehicle, an engine starting control method thereof, a medium, and a controller, relating to the technical field of hybrid vehicles. The method comprises: after satisfying an engine starting condition, acquiring the engine oil temperature and the cooling liquid temperature of the engine; according to the engine oil temperature and the cooling liquid temperature, looking up in a preset corresponding relationship to obtain the torque working loss of the engine; and, according to the torque work loss, controlling an ISG motor of a hybrid vehicle so as to start the engine.

FIG. 3

**Description**

## CROSS-REFERENCE TO RELATED APPLICATIONS

The present disclosure claims priority to and benefits of Chinese Patent Application No. 202211504126.3, filed on November 28, 2022, and entitled "HYBRID ELECTRIC VEHICLE, METHOD FOR CONTROLLING ENGINE START, MEDIUM, AND CONTROLLER THEREOF". The entire content of the above-referenced applications is incorporated herein by reference.

## FIELD

The present disclosure relates to the field of hybrid electric vehicle technologies, and in particular, to a hybrid electric vehicle, and a method for controlling engine startup, a medium, and a controller thereof.

## BACKGROUND

In a hybrid electric vehicle, when an engine participates in power generation, operating conditions such as engine start, power generation, and shutdown are involved. The engine and an integrated starter generator motor (ISG motor) need to cooperate in the operating conditions. In a cooperation process, torque control is involved. In addition, in an actual operating condition, the engine has a torque loss. In related arts, the torque loss of a used engine may be greatly different from an actual torque loss, causing inaccuracy in engine start control, and affecting working smoothness of the ISG motor.

## SUMMARY

An objective of the present disclosure is to provide a hybrid electric vehicle, and a method for controlling engine start, a medium, and a controller thereof, so as to improve accuracy of engine start control and ensure working smoothness of an ISG motor.

According to a first aspect, the present disclosure provides a method for controlling engine start of a hybrid electric vehicle. The method includes: obtaining an engine oil temperature and an engine cooling liquid temperature after an engine startup condition is satisfied; searching a preset correspondence according to the engine oil temperature and the cooling liquid temperature, to obtain a torque work loss of the engine; and controlling an ISG motor of the hybrid electric vehicle according to the torque work loss, to start the engine.

According to a second aspect, the present disclosure provides a computer-readable storage medium. The computer-readable storage medium stores a computer program. When the computer program is executed by a processor, the foregoing method for controlling engine start of a hybrid electric vehicle is implemented.

According to a third aspect, the present disclosure provides a controller, including a memory, a processor, and a computer program stored in the memory. When the computer program is executed by the processor, the foregoing method for controlling engine start of a hybrid electric vehicle is implemented.

According to a fourth aspect, the present disclosure provides a hybrid electric vehicle, including: an engine, an ISG motor, and the foregoing controller.

According to the hybrid electric vehicle, and the method for controlling engine start, the medium, and the controller thereof in the embodiments of the present disclosure, during startup and control of an engine, the torque loss of the engine is obtained by performing table lookups according to the engine cooling liquid temperature and the engine oil temperature, and a working torque (that is, the target torque) of the ISG motor is back-calculated by using a torque balance formula, to perform engine start control, so that the engine torque loss used in an engine start control process is more accurate, the torque control of the ISG motor is more accurate, the ISG motor and the engine cooperatively work better, and performance in speed variability of the engine is improved.

The additional aspects and advantages of the present disclosure will be provided in the following description, some of which will become apparent from the following description or may be learned from practices of the present disclosure.

## BRIEF DESCRIPTION OF THE DISCLOSURE

FIG. 1 is a schematic diagram of a power frame of a hybrid electric vehicle according to an embodiment of the present disclosure;

FIG. 2 is a schematic diagram of performance in control of engine start of a hybrid electric vehicle in the related arts;

FIG. 3 is a flowchart of a method for controlling engine start of a hybrid electric vehicle according to an embodiment of the present disclosure;

FIG. 4 is a flowchart of a method for controlling engine start of a hybrid electric vehicle according to another embodiment of the present disclosure;

FIG. 5 is a calculation flowchart of a combustion torque according to an embodiment of the present disclosure;

FIG. 6 is a calculation flowchart of a rotation torque according to an embodiment of the present disclosure;

FIG. 7 is a correction flowchart of a loss torque according to an embodiment of the present disclosure;

FIG. 8 is a schematic diagram of performance in control of engine start of a hybrid electric vehicle according to the present disclosure;

FIG. 9 is a structural block diagram of a controller according to an embodiment of the present disclosure; and

FIG. 10 is a structural block diagram of a hybrid electric vehicle according to an embodiment of the present disclosure.

## DETAILED DESCRIPTION

The embodiments of the present disclosure are described below in detail. Examples of the embodiments are shown in the accompanying drawings, and same or similar reference signs in all the accompanying drawings indicate same or similar components or components having same or similar functions. The embodiments described below with reference to the accompanying drawings are exemplary, and are merely intended to explain the present disclosure and cannot be construed as a limitation to the present disclosure.

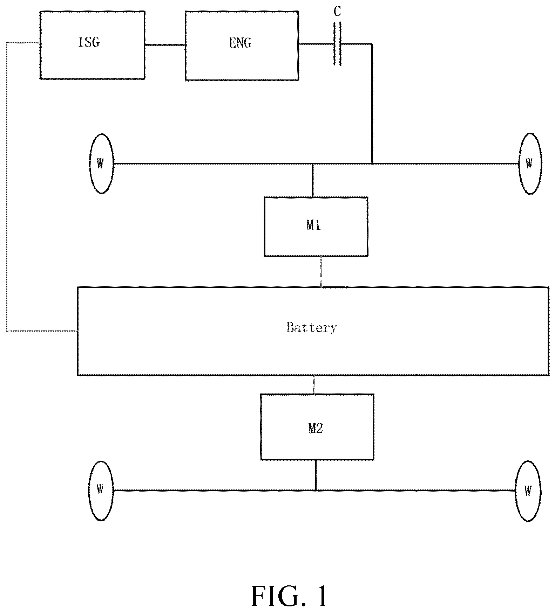

In the present disclosure, a power architecture of a hybrid electric vehicle is shown in FIG. 1, and includes an integrated starter generator motor (an ISG motor), an engine (ENG), a clutch (C), a power battery (Battery), and drive motors (M1 and M2). A connection to the power battery is a high-voltage cable connection, other connections are mechanical connections, and W is a wheel of the hybrid electric vehicle. When the engine needs to be started and run, the ISG motor drags the engine to rotate. In this case, the ISG motor is a power source, and the engine is a load. When the engine needs to supplement the power battery with the electric energy, the running engine drives the ISG motor to rotate, and the ISG motor generates electric energy to supplement the power battery. In this case, the engine is a power source, and the ISG motor is a load. When the engine needs to directly participate in driving, the clutches are combined, and the engine directly transmits power to wheel ends.

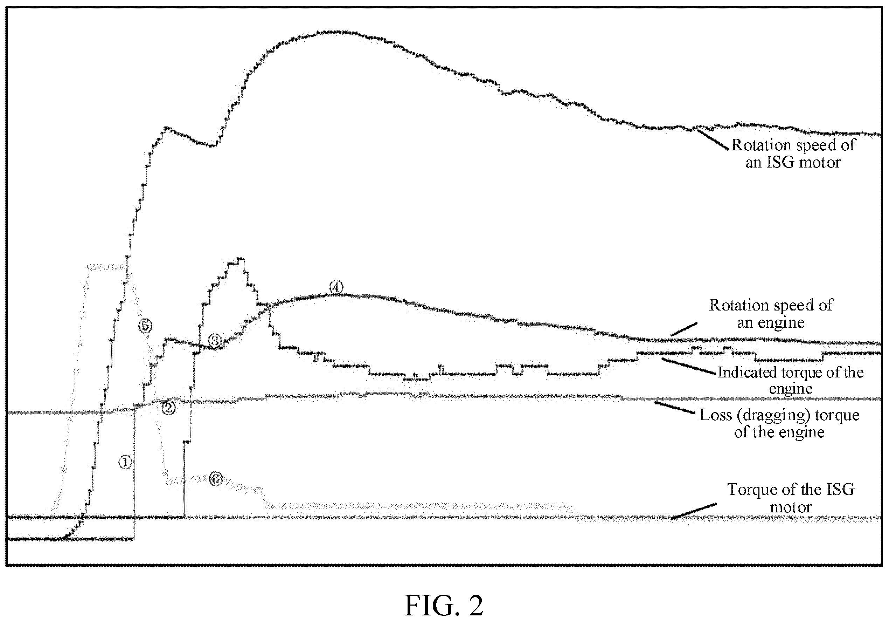

In the related arts, regardless of an ambient temperature, when the ISG motor drives and starts the engine, a same torque loss is used. The loss torque of engine is inaccurate. Moreover, the ISG motor loads and unloads the torque with a fixed slope. Unstableness exists in a rotation speed transition during startup, causing jitter and rush, and poor performance of startup. It can be understood from an analysis of marked points in FIG. 2 that, a starting process of the related arts has at least the following 6 problems:

1. A dragging torque of the ISG motor is excessively large, a synchronization time of the rotation speed of the engine and of the ISG motor is relatively long, and a workload of a torsional shock absorber is large, which may cause a problem such as abnormal noise during startup.
2. A torque loss of the engine is inaccurate, and torque control precision of the engine is not high.
3. The rotation speed of the engine shows a drop, and fluctuation of the rotation speed causes jitter.

4. An upstroke speed of the engine is excessively high, and is usually greater than an idle speed by about 300 rpm.
5. An unloading torque slope of the ISG motor is fixed, which is usually a fixed value, and cannot adapt to various ambient temperatures.
6. A torque of the ISG motor is not completely unloaded, and force bearing on a transmission axis is imbalanced, causing a secondary upstroke of the rotation speed.

In view of this, the present disclosure provides a hybrid electric vehicle, and a method for controlling engine start, a medium, and a controller thereof. In different ambient temperatures, different torque losses are used to control the ISG motor to drag and start the engine, to improve control accuracy of the engine start and ensure smoothness of operation of the ISG motor. The following describes the hybrid electric vehicle, and the method for controlling engine start, the medium, and the controller thereof in the embodiments of the present disclosure with reference to the accompanying drawings.

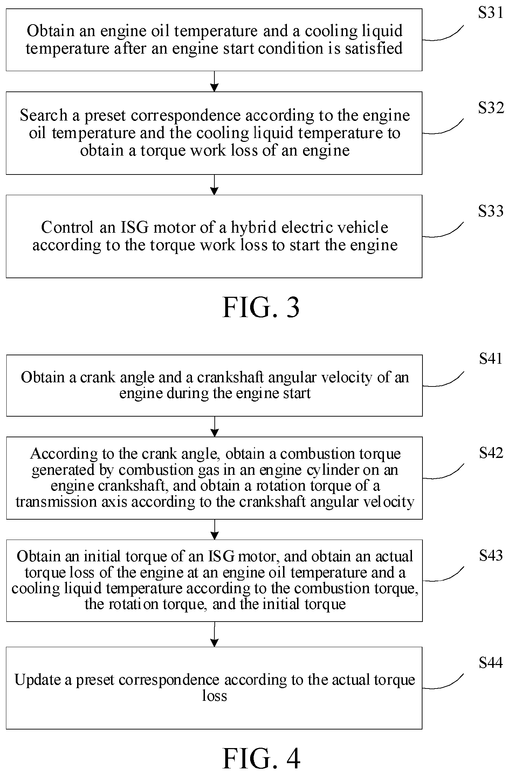

FIG. 3 is a flowchart of a method for controlling engine start of a hybrid electric vehicle according to an embodiment of the present disclosure. As shown in FIG. 3, the method for controlling engine start includes:
S31: An engine oil temperature and an engine cooling liquid temperature are obtained after an engine start condition is satisfied.

The engine start condition may be that the hybrid electric vehicle starts a Hybrid Electric Vehicle (HEV) mode, or may be that the hybrid electric vehicle needs to perform charging.

In some examples, an HEV switching button is provided in the hybrid electric vehicle. When a user presses the button, a whole vehicle controller of the hybrid electric vehicle obtains a mode-switching instruction of the hybrid electric vehicle. In this case, it may be determined that the hybrid electric vehicle currently meets an engine start condition.

In some other examples, when a current remaining power amount of a power battery in the hybrid electric vehicle is less than a first power amount threshold, it is determined that the engine start condition is currently satisfied. The first power amount threshold may be preset, for example, may be set to 10%.

In still some other examples, if the hybrid electric vehicle is in a stopping state, when it is detected that a depth of a gas pedal of the hybrid electric vehicle is greater than an opening degree threshold, and a remaining power amount of the power battery is less than a second power amount threshold and greater than the first power amount threshold, it is determined that the engine start condition is currently met.

S32: A preset correspondence is searched according to the engine oil temperature and the cooling liquid temperature to obtain a torque work loss of the engine.

Specifically, after the engine start condition is satisfied, the ISG motor and the engine need to cooperate to start the engine. To ensure accuracy of torque losses (including a pumping loss, a ventilation loss, an attachment friction loss, and the like) of the engine during engine start control, in the present disclosure, it is considered that the torque losses of the engine are different due to different viscosities of the engine oil and different friction of the engine at different engine oil temperatures and different cooling liquid temperatures. Correspondences (that is, the foregoing preset correspondences which may be stored in a table form) between the engine oil temperature, the cooling liquid temperature, and the torque losses of the engine are established, so that when the engine start condition is satisfied, the engine oil temperature and the engine cooling liquid temperature are first obtained. Further, the preset correspondence is searched to obtain a corresponding torque loss (that is, the foregoing work loss torque of the engine). The engine oil temperature and the cooling liquid temperature may be detected by setting corresponding temperature sensors.

S33: The ISG motor of the hybrid electric vehicle is controlled according to the torque work loss to start the engine.

Specifically, after the torque work loss of the engine is obtained, the target torque of the ISG motor may be obtained based on the torques work loss (for example, a correspondence between the torque loss and the target torque may be established, and then the target torque of the ISG motor is obtained by searching the correspondence based on the work loss torque), and then loading control and unloading control may be performed on the ISG motor according to the target torque. Loading control may be controlling the ISG motor to load a torque to the target torque, and dragging the engine to rotate at the target torque. The unloading control may be controlling the ISG motor to unload a torque when the rotation speed of the engine reaches a rotation speed threshold N1. It should be noted that, while the ISG motor is controlled to unload the torque, the engine is controlled to be ignited and injected with fuel. When the rotation speed of the engine reaches a rotation speed threshold N2, an Engine Management System (EMS) determines that the engine is started. Then, the engine transitions to control of a Vehicle Control Unit (VCU) target torque, and responds to the VCU target torque.

According to the method for controlling engine start of a hybrid electric vehicle in this embodiment of the present disclosure, when the engine start condition is satisfied, the engine oil temperature and the engine cooling liquid temperature are first obtained, the preset correspondence is further searched to obtain the torque work loss of the engine, and the ISG motor is controlled based on the torque work loss to start the engine, so that accuracy of engine start control can be improved, and smoothness of work of the ISG motor can be ensured.

In some embodiments of the present disclosure, as shown in FIG. 4, the method for controlling engine start further includes:

S41: A crank angle and a crankshaft angular velocity of an engine are obtained during starting of the engine.

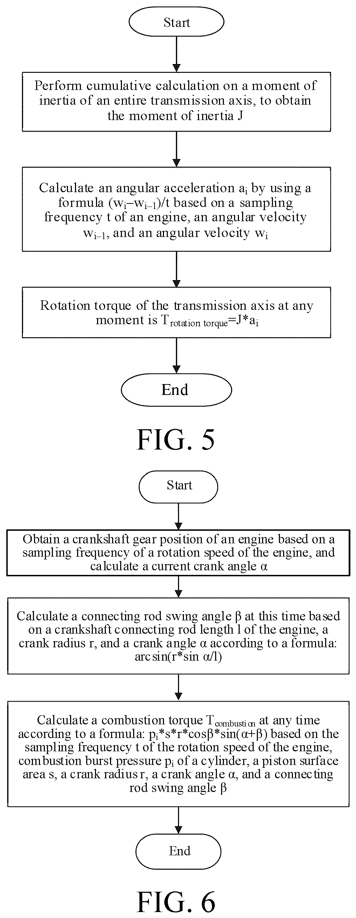

Specifically, as shown in FIG. 5, a sampling frequency the same as a sampling frequency of a rotation speed of the engine may be used. In an engine starting process, a crankshaft position gear position at this moment is obtained by using a crankshaft position sensor, and a crank rotation angle $\alpha$ of the engine may be obtained according to the crankshaft position gear position. The crank rotation angle $\alpha$ is a crank rotation angle corresponding to an engine cylinder that is performing expansion work, ranges from 0° to 180 °, and is represented as a crankshaft rotation angle of an expansion work stroke. In addition, as shown in FIG. 6, a sampling frequency the same as a sampling frequency of a rotation speed of an engine may be used, and a crankshaft angular velocity may be obtained by using an angular velocity sensor.

S42: According to the crank angle, a combustion torque generated by combustion gas in an engine cylinder on an engine crankshaft is obtained, and a rotation torque of a transmission axis is obtained according to the crankshaft angular velocity.

In some examples, the combustion torque is obtained by using the following formula:

$$T_{combustion}=p_i*s*\cos\beta*r*\sin(\alpha+\beta),$$

where $T_{combustion}$ is the combustion torque, $\beta=\arcsin(r*\sin\alpha/l)$ and is a crankshaft connecting rod swing angle, l is a crankshaft connecting rod length, r is a crank radius, s is a surface area of a head of a piston in a cylinder, $\alpha$ is a crank rotation angle, and pi is combustion burst pressure in the cylinder.

Specifically, referring to FIG. 5, for the engine of the hybrid electric vehicle, the crankshaft connecting rod length l, the crank radius r, and the surface area s of the head of the piston are fixed values, and a correspondence between the crankshaft connecting rod swing angle $\beta$ and the crank rotation angle $\alpha$ satisfies $\beta=\arcsin(r*\sin\alpha/l)$, that is, the crankshaft connecting rod swing angle $\beta$ and the crank rotation angle $\alpha$ are in a one-to-one correspondence. In a case in which the crankshaft connecting rod length l, the crank radius r, the surface area s of the head of the piston, the connecting rod swing angle $\beta$, the crank rotation angle $\alpha$, and the combustion burst pressure pi in the cylinder are all known, it can be obtained by analyzing the force bearing on the crankshaft of the piston that high-temperature and high-pressure combustion gas in the cylinder generates a combustion torque to the crankshaft, and $T_{combustion}=p_i*s*\cos\beta*r*\sin(\alpha+\beta)$.

In some examples, the rotation torque is obtained by using the following formula:

$$T_{torque}=J*a_i,$$

where $T_{torque}$ is the rotation torque, J is the moment of inertia of the transmission axis, $a_i=(w_i-w_{i-1})/t$ and is a crank angular acceleration at an $i^{th}$ moment, wi is a crankshaft angular velocity at the $i^{th}$ moment, and t is a time difference between the $i^{th}$ moment and an $(i-1)^{th}$ moment.

Specifically, when the engine has a non-constant rotation speed, a rotation torque may exist on the engine and an entire transmission axis due to a rotation acceleration. Referring to FIG. 6, the moment of inertia of the engine crankshaft, a flywheel, a torsional shock absorber and a rotating component connected to the ISG motor may be obtained through integration and accumulation. It should be noted that for a determined combination of the ISG motor and the engine, the moment of inertia J is a fixed value, may be pre-stored, and is directly read and used when needed.

After obtaining a crankshaft angular speed wi at a current sampling moment and a crankshaft angular speed $w_{i-1}$ at a previous sampling moment, an angular acceleration ai at a current moment may be calculated according to a formula $(w_i-w_{i-1})/t$, and then a rotation torque $T_{torque}$ of a transmission axis at a moment i is obtained according to a formula $J*a_i$.

S43: An initial torque of the ISG motor is obtained, and an actual torque loss of the engine at an engine oil temperature and a cooling liquid temperature is obtained according to the combustion torque, the rotation torque, and the initial torque.

In some examples, obtaining the actual loss torque of the engine at an engine oil temperature and a cooling liquid temperature according to the combustion torque, the rotation torque, and the initial torque may include: calculating a difference between the combustion torque and the rotation torque, calculating a sum of the difference and the initial torque, and using the sum as the actual loss torque.

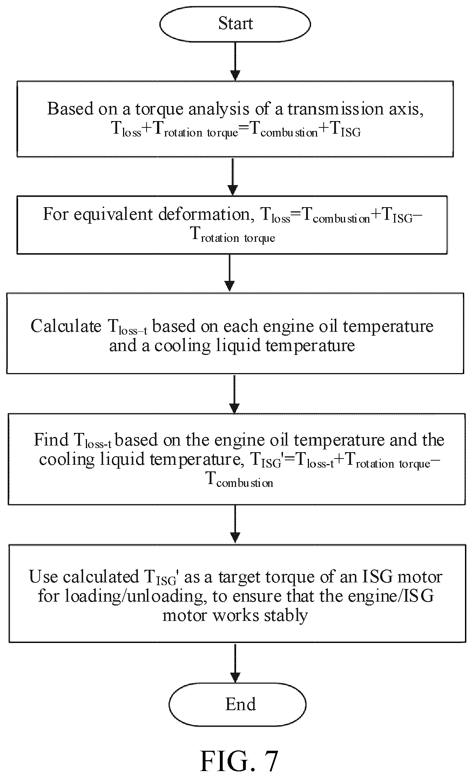

Specifically, as shown in FIG. 7, as can be known from a torque analysis performed on a transmission axis, at any time point, there is force balance $T_{combustion} + T_{ISG} = T_{loss} + T_{rotation\ torque}$. $T_{ISG}$ is a positive torque when the engine is started, and is a negative torque when the engine participates in power generation; when the engine rotates at a constant speed, $T_{torque}$ is 0, and $T_{combustion} + T_{ISG} = T_{loss}$. When the engine rotates at a non-constant speed, $T_{torque}$ is not 0, and $T_{combustion} + T_{ISG} = T_{loss} + T_{rotation}$ torque.

Referring to FIG. 7, $T_{loss} = T_{combustion} + T_{ISG} - T_{rotation\ torque}$ may be obtained by deforming the equation $T_{combustion} + T_{ISG} = T_{loss} + T_{rotation}$ torque. When $T_{combustion}$, $T_{rotation}$ torque and $T_{ISG}$ are all known, the actual loss torque $T_{loss}$ of the engine may be calculated according to the formula $T_{loss} = T_{combustion} + T_{ISG} - T_{rotation}$ torque.

It should be noted that, the initial torque of the ISG motor used for calculating the actual torque loss is a constant value, may be a target torque of the ISG motor that is used when the engine is started for the first time after delivery of the hybrid electric vehicle, and is a value set by delivery. In a process of controlling engine start of the hybrid electric vehicle, an actual torque loss may be continuously calculated according to the combustion torque and the rotation torque, to obtain a stable difference between the combustion torque and the rotation torque, so as to obtain stable $T_{loss}$ according to the formula $T_{loss} = T_{combustion} + T_{ISG} - T_{rotation}$ torque.

S44: The preset correspondence is updated according to the actual torque loss.

Specifically, during actual engineering application, the torque loss of the engine is obtained by means of interpolation on a preset table stored in an EMS chip, and a loss torque table is usually measured on an engine rig by using a vanishing cylinder method, a fuel consumption line method, or a drag inversion method, and most of gas engines are measured by using the drag inversion method. Because in the drag inversion method, the torque loss of the engine is usually obtained by measurement at an engine cooling liquid temperature of 85°C and above and an engine oil temperature of 85°C and above, the torque loss of the engine measured in the drag inversion method does not consider a rotation torque of a transmission axis, and also does not consider a difference in torque losses of the engine at different engine cooling liquid temperatures and engine oil temperatures. In this way, in an actual service condition of a whole vehicle service condition, a large difference exists between the torque loss of the engine and the actual torque loss obtained through table lookup.

An actual torque loss value of the engine at any time when the entire vehicle is actually used may be obtained from the foregoing formula $T_{loss} = T_{combustion} + T_{ISG} - T_{rotation\ torque}$. In addition, it is considered that at different engine oil temperatures and different cooling liquid temperatures of the engine, the viscosity of the engine oil is different, the friction of the engine is also different, and the torque loss of the engine is also different. Therefore, it is very necessary to calculate the torque loss $T_{loss}$ t of the engine for each engine oil temperature and each engine cooling liquid temperature.

Therefore, referring to FIG. 7, in the present disclosure, during each engine start control, the engine oil temperature and the engine cooling liquid temperature are recorded, a motivation torque loss $T_{loss-t}$ is calculated by using a formula $T_{loss} = T_{combustion} + T_{ISG} - T_{rotation\ torque}$, $T_{loss-t}$ is used as an environment-based adaptive self-learning value of a torque loss of the engine measured by using a drag inversion method, and a current preset correspondence between the engine oil temperature, the engine cooling liquid temperature, and the torque loss is updated. In subsequent actual use of the entire vehicle, if the engine is at an engine oil temperature and an engine cooling liquid temperature, the EMS obtains corresponding $T_{loss-t}$ by means of table lookup, and sends corresponding $T_{loss-t}$ as the torque loss of the engine to a bus of an automobile to interact with other controllers. The updating may be: if the currently recorded engine oil temperature and engine cooling liquid temperature do not exist in the current preset correspondence, directly adding the engine oil temperature, the engine cooling liquid temperature, and the corresponding actual torque loss to the current preset correspondence; or if the currently recorded engine oil temperature and engine cooling liquid temperature exist in the current preset correspondence, replacing the engine oil temperature, the engine cooling liquid temperature, and the corresponding actual torque loss in the current preset correspondence with the existing engine oil temperature, engine cooling liquid temperature, and corresponding actual torque loss. In this way, accuracy of the torque loss of the engine used in the hybrid electric vehicle can be ensured.

In some embodiments, controlling the ISG motor of the hybrid electric vehicle according to the torque work loss may include: obtaining a target torque of the ISG motor according to the torque work loss, the rotation torque, and the combustion torque; and performing loading control and unloading control on the ISG motor according to the target torque.

Specifically, after the torque loss $T_{loss-t}$ of the engine is sent to the bus of the automobile, the ISG motor may determine the target torque of the ISG motor according to a formula $T_{ISG}' = T_{loss-t} + T_{rotation\ torque} - T_{combustion}$, to perform loading control and unloading control of the ISG motor.

In some embodiments, the method for controlling engine start further includes: determining whether the engine is in a constant-speed rotation process according to the crankshaft angular velocity; and if the engine is in the constant-speed rotation process, adjusting fuel injection, ignition, and air intake of the engine, so that the ISG motor works smoothly; or if the engine is in a non-constant-speed rotation process, determining a loading slope and an unloading slope of the ISG motor according to a change of the rotation torque, performing loading control on the ISG motor according to the loading slope, and performing unloading control the ISG motor according to the unloading slope.

Specifically, in the constant-speed rotation process of the engine, $T_{rotation\ torque}$ is 0. In this case, a steady-state operation may be further implemented by adjusting fuel injection, ignition, and air intake of the engine, so that the ISG motor works smoothly, and a load impact caused by fluctuation of a voltage and a current is reduced. In the non-constant-speed rotation process of the engine, $T_{rotation\ torque}$ is not 0. In this case, the loading slope and the unloading slope of the ISG motor may be determined according to a dynamic change of the rotation torque of the transmission axis, so that the ISG motor and the engine work together better, thereby improving quality in a speed varying process of the engine. The determining the loading slope and the unloading slope of the ISG motor according to a dynamic change of the rotation torque of the transmission axis may be: in a loading process, when the rotation torque is 0, the loading slope is a constant value, and when the rotation torque is greater than 0, the loading slope decreases. In an unloading process, when the rotation torque is 0, the unloading slope is a constant value, and when the rotation torque is greater than 0, the unloading slope increases.

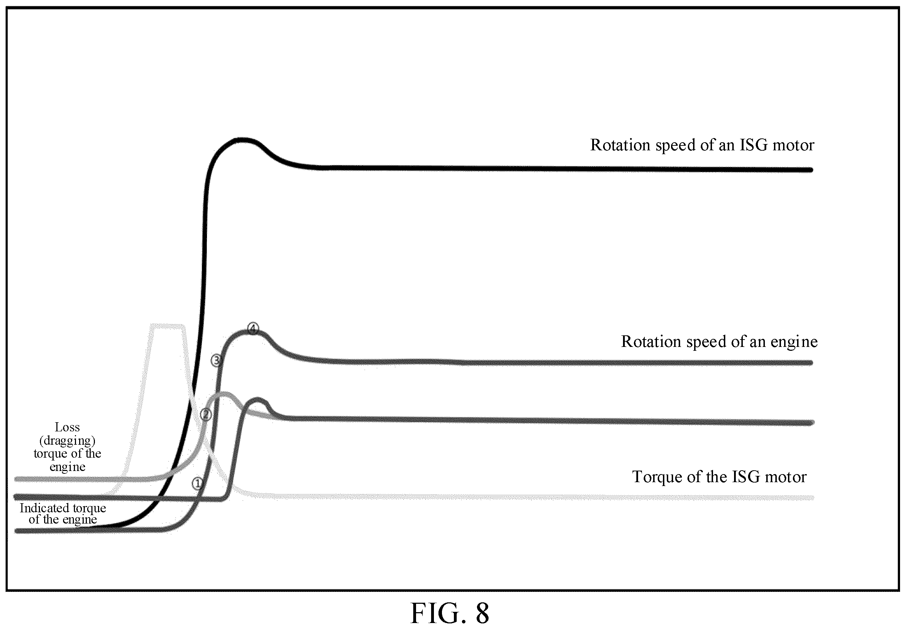

As shown in FIG. 8, after the unloading torque of the ISG motor is adjusted by using the method of the present disclosure, a rotation speed of the engine at a location ① increases stably, the torque loss of the engine at a location ② is accurate, the rotation speed of the engine at a location ③ shows no drop, and an upstroke speed of the engine at a location ④ can be controlled to be within 150 rpm. The ISG motor and the engine work together excellently, and start quality is improved.

Based on the foregoing method for controlling engine start of a hybrid electric vehicle, the present disclosure further provides a computer-readable storage medium.

In this embodiment of this application, a computer program is stored in a computer-readable storage medium. When the computer program is executed by a processor, the method for controlling engine start of a hybrid electric vehicle is implemented.

The present disclosure further provides a controller.

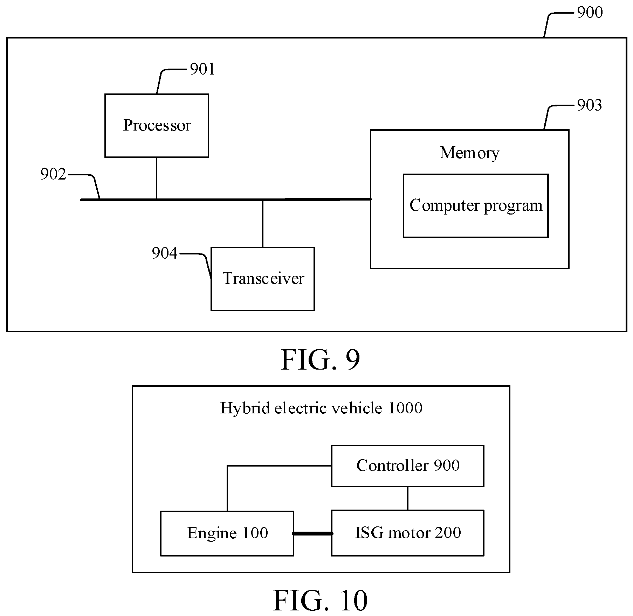

FIG. 9 is a structural block diagram of a controller according to an embodiment of the present disclosure.

As shown in FIG. 9, the controller 900 includes a processor 901 and a memory 903. The processor 901 and the memory 903 are connected, for example, via a bus 902. Alternatively, the controller 900 may further include a transceiver 904. It should be noted that, in actual application, the transceiver 904 is not limited to one, and a structure of the controller 900 does not constitute a limitation to this embodiment of the present disclosure.

The processor 901 may be a Central Processing Unit (CPU), or may be another general-purpose processor, a Digital Signal Processor (DSP), an Application Specific Integrated Circuit (ASIC), a Field Programmable Gate Array (FPGA) or another programmable logic device, a transistor logic device, a hardware component, or any combination thereof. It may implement or execute various exemplary logical blocks, modules, and circuits described in combination with the present disclosure. Alternatively, the processor 901 may be a combination of processors that implements a computing function, for example, a combination of one or more microprocessors, or a combination of a DSP and a microprocessor.

The bus 902 may include a channel, to transmit information between the foregoing components. The bus 902 may be a Peripheral Component Interconnect (PCI) bus, an Extended Industry Standard Architecture (EISA) bus, or the like. The bus 902 may be classified into an address bus, a data bus, a control bus, and the like. For ease of representation, only one bold line is used to represent the bus in FIG. 5, but this does not mean that there is only one bus or only one type of bus.

The memory 903 is configured to store a computer program corresponding to the method for controlling engine start of a hybrid electric vehicle in the foregoing embodiments of the present disclosure. The computer program is controlled and executed by the processor 901. The processor 901 is configured to execute computer programs stored in a memory 903, to implement content shown in the foregoing method embodiments.

It should be noted that, the controller 900 shown in FIG. 9 is merely an example, and should not constitute any limitation on functions and use ranges of the embodiments of the present disclosure.

The present disclosure further provides a hybrid electric vehicle.

FIG. 10 is a structural block diagram of a hybrid electric vehicle according to the present disclosure.

As shown in FIG. 10, the hybrid electric vehicle 1000 includes an engine 100, an ISG motor 200, and the controller 900 in the foregoing embodiment.

In conclusion, according to the hybrid electric vehicle, and the method for controlling engine start, the medium, and the controller thereof in the embodiments of the present disclosure, an actual torque loss in a rotation process of the engine is calculated by using the initial torque of the ISG motor, the combustion torque of the engine, and the rotation torque of the transmission axis. Meanwhile, the engine cooling liquid temperature and the engine oil temperature in the operation condition are obtained, and the temperature and an actual torque loss corresponding to the temperature are used as environmental-based adaptive self-learning values, to update the preset correspondence stored in the EMS. Further, in subsequent (next or several) engine start control, the torque loss of the engine is obtained by looking up a table according to the engine cooling liquid temperature and the engine oil temperature, and the working torque (that is, the target torque) of the ISG motor is back-calculated by using a torque balance formula, so as to control the engine start. Therefore, the torque loss of the engine used in an engine start control process is more accurate, so that ISG motor torque control is more accurate, the ISG motor and the engine work together excellently, and the speed varying quality of the engine is improved.

It should be noted that, the logic and/or steps shown in the flowcharts or described in any other manner herein, for example, a sequenced list that may be considered as executable instructions used for implementing logical functions, may be specifically implemented in any computer-readable medium to be used by an instruction execution system, apparatus, or device (for example, a computer-based system, a system including a processor, or another system that can obtain an instruction from the instruction execution system, apparatus, or device and execute the instruction) or to be used by combining such instruction execution systems, apparatuses, or devices. In the specification of this application, the "computer-readable medium" may be any apparatus that can include, store, communicate, propagate, or transmit programs to be used by the instruction execution system, apparatus or device or to be used in combination with the instruction execution system, apparatus or device. More specific examples (a non-exhaustive list) of the computer-readable medium include the following: an electrical connection part (electronic device) having one or more wires, a portable computer diskette (magnetic apparatus), a random access memory (RAM), a read-only memory (ROM), an erasable programmable read-only memory (EPROM or flash memory), an optical fiber apparatus, and a portable compact disk read-only memory (CDROM). In addition, the computer-readable medium may even be paper or another suitable medium on which the program can be printed, because the program can be obtained in an electronic manner, for example, by performing optical scanning on the paper or the another medium, and then performing editing and interpretation, or performing processing in another suitable manner when necessary, and then the program is stored in a computer memory.

It should be understood that, parts of the present disclosure can be implemented by using hardware, software, firmware, or a combination thereof. In the foregoing implementations, a number of steps or methods may be implemented by using software or firmware that are stored in a memory and are executed by a proper instruction execution system. For example, if hardware is used for implementation, same as in another implementation, implementation may be performed by any one of the following technologies well known in the art or a combination thereof: a discrete logic circuit of a logic gate circuit for realizing a logic function for a data signal, an application specific integrated circuit having a suitable combined logic gate circuit, a programmable gate array (PGA), and a field programmable gate array (FPGA).

In the description of this specification, the description of the reference terms "an embodiment", "some embodiments", "an example", "a specific example", "some examples," and the like means that specific features, structures, materials or characteristics described in combination with the embodiment(s) or example(s) are included in at least one embodiment or example of the present disclosure. In this specification, exemplary descriptions of the foregoing terms do not necessarily refer to the same embodiment or example. In addition, the described specific features, structures, materials, or characteristics may be combined in a proper manner in any one or more of the embodiments or examples.

In the description of the present disclosure, it should be understood that orientation or position relationships indicated by the terms such as "center", "longitudinal", "transverse", "length", "width", "thickness", "on", "below", "front", "back", "left", "right", "vertical", "horizontal", "top", "bottom", "inside", "outside", "clockwise", "anticlockwise", "axial", "radial", and "circumferential" are based on orientation or position relationships shown in the accompanying drawings, and are used only for ease and brevity of illustration and description, rather than indicating or implying that the mentioned apparatus or component must have a particular orientation or must be constructed and operated in a particular orientation. Therefore, such terms should not be construed as a limit to the present disclosure.

In addition, terms "first" and "second" are used merely for the purpose of description, and shall not be construed as indicating or implying relative importance or implying a quantity of indicated technical features. Therefore, a feature restricted by "first" or "second" may explicitly indicate or implicitly include at least one of such features. In the descriptions of the present disclosure, unless explicitly specified, "multiple" means at least two, for example, two or three.

In the present disclosure, it should be noted that unless otherwise explicitly specified and limited, the terms "mount", "connect", "connection", and "fix" should be understood in a broad sense. For example, a connection may be a fixed connection, a detachable connection, or an integral connection; or the connection may be a mechanical connection or an electrical connection; or the connection may be a direct connection, an indirect connection through an intermediary, or internal communication between two elements or mutual action relationship between two elements, unless otherwise specified explicitly. A person of ordinary skill in related arts can understand specific meanings of the terms in the present disclosure based on specific situations.

In the present disclosure, unless otherwise explicitly specified or defined, the first feature being located "above" or "below" the second feature may be the first feature being in a direct contact with the second feature, or the first feature being in an indirect contact with the second feature through an intermediary. In addition, that the first feature is "above", "over", or "on" the second feature may indicate that the first feature is directly above or obliquely above the second feature, or may merely indicate that the horizontal position of the first feature is higher than that of the second feature. That the first feature is "below", "under", and "beneath" the second feature may be that the first feature is right below the second feature or at an inclined bottom of the second feature, or may merely indicate that the horizontal position of the first feature is lower than that of the second feature.

Although the embodiments of the present disclosure have been shown and described above, it can be understood that, the foregoing embodiments are exemplary and should not be understood as a limitation to the present disclosure. A person of ordinary skill in the art can make changes, modifications, replacements, or variations to the foregoing embodiments within the scope of the present disclosure.

## Claims

1. A method for controlling engine start of a hybrid electric vehicle, the method comprising:

    obtaining an engine oil temperature and an engine cooling liquid temperature after an engine start condition is satisfied;
    searching a preset correspondence according to the engine oil temperature and the cooling liquid temperature, to obtain a torque work loss of the engine; and
    controlling an ISG motor of the hybrid electric vehicle according to the torque work loss, to start the engine.

2. The method for controlling engine start of a hybrid electric vehicle according to claim 1, wherein the method further comprises:

    acquiring a crank angle and a crankshaft angular velocity of the engine in a process of the engine start;
    obtaining, according to the crank angle, a combustion torque generated by combustion gas in an engine cylinder on an engine crankshaft, and obtaining a rotational torque of a transmission axis according to the crankshaft angular velocity; and
    obtaining an initial torque of the ISG motor, and obtaining an actual torque loss of the engine at the engine oil temperature and the cooling liquid temperature according to the combustion torque, the rotation torque, and the initial torque; and
    updating the preset correspondence according to the actual torque loss.

3. The method for controlling engine start of a hybrid electric vehicle according to claim 2, wherein obtaining the actual torque loss of the engine at the engine oil temperature and the cooling liquid temperature according to the combustion torque, the rotation torque, and the initial torque comprises:
   calculating a difference between the combustion torque and the rotation torque, calculating a sum of the difference and the initial torque, and using the sum as the actual loss torque.

4. The method for controlling engine start of a hybrid electric vehicle according to claim 2 or 3, wherein the combustion torque is obtained by using the following formula:

$$T_{combustion}=p_i*s*cos\beta*r*sin(\alpha+\beta),$$

wherein $T_{combustion}$ is the combustion torque, $\beta=arcsin(r*sin\alpha/l)$ and is a crankshaft connecting rod swing angle, l is a crankshaft connecting rod length, r is a radius of a crank, s is a surface area of a head of a piston in a cylinder, $\alpha$ is a crank rotation angle, and pi is a combustion burst pressure in the cylinder.

5. The method for controlling engine start of a hybrid electric vehicle according to any one of claims 2 to 4, wherein the rotation torque is obtained by using the following formula:

$$T_{torque}=J*a_i,$$

wherein $T_{torque}$ is the rotation torque, J is a moment of inertia of the transmission axis, $a_i=(w_i-w_{i-1})/t$ and is a crankshaft angular acceleration at an $i^{th}$ moment, wi is a crankshaft angular velocity at the $i^{th}$ moment, and t is a time difference between the $i^{th}$ moment and an $(i-1)^{th}$ moment.

6. The method for controlling engine start of a hybrid electric vehicle according to any one of claims 2 to 5, wherein controlling the ISG motor of the hybrid electric vehicle according to the torque work loss comprises:

    obtaining a target torque of the ISG motor according to the torque work loss, the rotation torque, and the combustion torque; and
    performing loading control and unloading control on the ISG motor according to the target torque.

7. The method for controlling engine start of a hybrid electric vehicle according to claim 6, wherein the method further comprises:

    determining whether the engine is in a constant-speed rotation process according to the crankshaft angular velocity; and
    if the engine is in the constant-speed rotation process, adjusting fuel injection, ignition, and air intake of the engine, so that the ISG motor works smoothly; or
    if the engine is in a non-constant-speed rotation process, determining a loading slope and an unloading slope of the ISG motor according to a change of the rotation torque, performing loading control on the ISG motor according to the loading slope, and performing unloading control on the ISG motor according to the unloading slope.

8. A computer-readable storage medium storing a computer program, when the computer program is executed by a processor, the method for controlling engine start of a hybrid electric vehicle according to any one of claims 1 to 7 is implemented.

9. A controller, comprising a memory, a processor, and a computer program stored in the memory, and when the computer program is executed by the processor, the method according to any one of claims 1 to 7 being implemented.

10. A hybrid electric vehicle, comprising: an engine, an ISG motor, and the controller according to claim 9.

FIG. 1

Rotation speed of
an ISG motor

Rotation speed of
an engine

Indicated torque of the
engine

Loss (dragging) torque
of the engine

Torque of the ISG
motor

FIG. 2

Obtain an engine oil temperature and a cooling liquid temperature after an engine start condition is satisfied — S31

Search a preset correspondence according to the engine oil temperature and the cooling liquid temperature to obtain a torque work loss of an engine — S32

Control an ISG motor of a hybrid electric vehicle according to the torque work loss to start the engine — S33

FIG. 3

Obtain a crank angle and a crankshaft angular velocity of an engine during the engine start — S41

According to the crank angle, obtain a combustion torque generated by combustion gas in an engine cylinder on an engine crankshaft, and obtain a rotation torque of a transmission axis according to the crankshaft angular velocity — S42

Obtain an initial torque of an ISG motor, and obtain an actual torque loss of the engine at an engine oil temperature and a cooling liquid temperature according to the combustion torque, the rotation torque, and the initial torque — S43

Update a preset correspondence according to the actual torque loss — S44

FIG. 4

```
                          ┌─────────┐
                          │  Start  │
                          └─────────┘
                               │
                               ▼
         ┌──────────────────────────────────────────┐
         │  Perform cumulative calculation on a      │
         │  moment of inertia of an entire           │
         │  transmission axis, to obtain             │
         │  the moment of inertia J                  │
         └──────────────────────────────────────────┘
                               │
                               ▼
         ┌──────────────────────────────────────────┐
         │  Calculate an angular acceleration aᵢ by  │
         │  using a formula (wᵢ–wᵢ₋₁)/t based on a    │
         │  sampling frequency t of an engine, an    │
         │  angular velocity wᵢ₋₁, and an angular     │
         │  velocity wᵢ                              │
         └──────────────────────────────────────────┘
                               │
                               ▼
         ┌──────────────────────────────────────────┐
         │  Rotation torque of the transmission      │
         │  axis at any moment is                    │
         │  T_rotation torque=J*aᵢ                   │
         └──────────────────────────────────────────┘
                               │
                               ▼
                          ┌─────────┐
                          │   End   │
                          └─────────┘
```

Perform cumulative calculation on a moment of inertia of an entire transmission axis, to obtain the moment of inertia J

Calculate an angular acceleration $a_i$ by using a formula $(w_i-w_{i-1})/t$ based on a sampling frequency t of an engine, an angular velocity $w_{i-1}$, and an angular velocity $w_i$

Rotation torque of the transmission axis at any moment is $T_{\text{rotation torque}}=J*a_i$

# FIG. 5

```
                          ┌─────────┐
                          │  Start  │
                          └─────────┘
                               │
                               ▼
```

Obtain a crankshaft gear position of an engine based on a sampling frequency of a rotation speed of the engine, and calculate a current crank angle α

Calculate a connecting rod swing angle β at this time based on a crankshaft connecting rod length l of the engine, a crank radius r, and a crank angle α according to a formula: $\arcsin(r*\sin \alpha/l)$

Calculate a combustion torque $T_{\text{combustion}}$ at any time according to a formula: $p_i*s*r*\cos\beta*\sin(\alpha+\beta)$ based on the sampling frequency t of the rotation speed of the engine, combustion burst pressure $p_i$ of a cylinder, a piston surface area s, a crank radius r, a crank angle α, and a connecting rod swing angle β

```
                          ┌─────────┐
                          │   End   │
                          └─────────┘
```

# FIG. 6

```
                    ⟨  Start  ⟩
                         │
                         ▼
┌────────────────────────────────────────────────┐
│   Based on a torque analysis of a transmission  │
│   axis, $T_{loss}+T_{rotation\ torque}=T_{combustion}+T_{ISG}$ │
└────────────────────────────────────────────────┘
                         │
                         ▼
┌────────────────────────────────────────────────┐
│   For equivalent deformation,                   │
│   $T_{loss}=T_{combustion}+T_{ISG}-T_{rotation\ torque}$ │
└────────────────────────────────────────────────┘
                         │
                         ▼
┌────────────────────────────────────────────────┐
│   Calculate $T_{loss-t}$ based on each engine oil │
│   temperature and a cooling liquid temperature  │
└────────────────────────────────────────────────┘
                         │
                         ▼
┌────────────────────────────────────────────────┐
│   Find $T_{loss-t}$ based on the engine oil      │
│   temperature and the cooling liquid            │
│   temperature, $T_{ISG}'=T_{loss-t}+T_{rotation\ torque}-T_{combustion}$ │
└────────────────────────────────────────────────┘
                         │
                         ▼
┌────────────────────────────────────────────────┐
│   Use calculated $T_{ISG}'$ as a target torque of │
│   an ISG motor for loading/unloading, to ensure │
│   that the engine/ISG motor works stably        │
└────────────────────────────────────────────────┘
                         │
                         ▼
                    ⟨  End  ⟩
```

## FIG. 7

Rotation speed of an ISG motor

Rotation speed of an engine

Torque of the ISG motor

Loss (dragging) torque of the engine

Indicated torque of the engine

FIG. 8

900

901

Processor

903

Memory

902

Computer program

904

Transceiver

## FIG. 9

Hybrid electric vehicle 1000

Controller 900

Engine 100

ISG motor 200

## FIG. 10

## INTERNATIONAL SEARCH REPORT

| | International application No. |
|---|---|
| | **PCT/CN2023/115069** |

**A. CLASSIFICATION OF SUBJECT MATTER**

B60W20/15(2016.01)i

According to International Patent Classification (IPC) or to both national classification and IPC

**B. FIELDS SEARCHED**

Minimum documentation searched (classification system followed by classification symbols)

IPC:B60W

Documentation searched other than minimum documentation to the extent that such documents are included in the fields searched

Electronic data base consulted during the international search (name of data base and, where practicable, search terms used)

CNTXT, ENTXTC, ENTXT, DWPI, CJFD: 温度, 损失, 损耗, 摩擦扭矩, 摩擦转矩, 摩擦力矩, 起动, 启动, 燃烧扭矩, temperature, start, friction, loss, torque

**C. DOCUMENTS CONSIDERED TO BE RELEVANT**

| Category* | Citation of document, with indication, where appropriate, of the relevant passages | Relevant to claim No. |
|---|---|---|
| Y | CN 1896492 A (CHINA FAW GROUP CO., LTD.) 17 January 2007 (2007-01-17) description, embodiment 1 | 1, 8-10 |
| Y | US 6247437 B1 (TOYOTA MOTOR CO., LTD.) 19 June 2001 (2001-06-19) description, column 3, paragraphs 35-45 | 1, 8-10 |
| A | JP 2007146699 A (TOYOTA MOTOR CORP.) 14 June 2007 (2007-06-14) entire document | 1-10 |
| A | JP 2009097347 A (TOYOTA MOTOR CORP.) 07 May 2009 (2009-05-07) entire document | 1-10 |
| A | JP 2021075086 A (TOYOTA INDUSTRIES CORP.) 20 May 2021 (2021-05-20) entire document | 1-10 |
| A | US 2011054744 A1 (GM GLOBAL TECH OPERATIONS INC.) 03 March 2011 (2011-03-03) entire document | 1-10 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 November 2023** | **23 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/115069**

| Patent document cited in search report | | | Publication date (day/month/year) | Patent family member(s) | | | Publication date (day/month/year) |
|---|---|---|---|---|---|---|---|
| CN | 1896492 | A | 17 January 2007 | None | | | |
| US | 6247437 | B1 | 19 June 2001 | JPH | 11153075 | A | 08 June 1999 |
| | | | | EP | 0903492 | A2 | 24 March 1999 |
| | | | | DE | 69841379 | D1 | 28 January 2010 |
| JP | 2007146699 | A | 14 June 2007 | None | | | |
| JP | 2009097347 | A | 07 May 2009 | None | | | |
| JP | 2021075086 | A | 20 May 2021 | RU | 2754594 | C1 | 03 September 2021 |
| | | | | AU | 2020260403 | A1 | 20 May 2021 |
| US | 2011054744 | A1 | 03 March 2011 | DE | 102010035482 | A1 | 07 April 2011 |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211504126